# EUROPÄISCHE PATENTSCHRIFT

(11) **EP 0 772 989 B1**
(45) Veröffentlichungstag und Bekanntmachung des Hinweises auf die Patenterteilung: **26.01.2000**
(21) Anmeldenummer: 96116830.9
(22) Anmeldetag: 19.10.1996
(51) Int. Cl.: A47D 9/04

(54) **Schaukelantrieb für Kinderwippen**
Swinging drive for a cradle for children
Dispositif de basculement par une balançoire d'enfant

(30) Priorität: 11.11.1995 DE 29517900 U
(43) Veröffentlichungstag der Anmeldung: 14.05.1997
(73) Patentinhaber: systec POS-Technology GmbH, 82178 Puchheim (DE)
(72) Erfinder: Asenstorfer, Ludwig, 82377 Penzberg (DE); Fischer, Markus, 82515 Wolfratshausen (DE)
(74) Vertreter: Blumenröhr, Dietrich

(56) Entgegenhaltungen:
- WO-A-93/09702
- FR-A- 1 323 337
- FR-A- 1 501 951
- FR-A- 2 405 674
- FR-A- 2 638 343
- US-A- 4 985 949

## Beschreibung

Die vorliegende Erfindung betrifft eine Vorrichtung zur Erzeugung einer Schaukelbewegung bei Kinderwippen und dergleichen gemäß dem Oberbegriff von Anspruch 1. Mit Hilfe solcher Vorrichtungen ist es möglich, Kinderwippen, Kinderwagen und dergleichen in eine gleichmäßige Schaukelbewegung zu versetzen, um so das Kind zu beruhigen, ohne daß die Aufsichtsperson selbst tätig werden muß.

Eine derartige automatische Schaukelvorrichtung ist beispielsweise aus der US-A-4 985 949 bekannt: Hierbei wird zweckmäßigerweise die Schaukelvorrichtung auf die selbe Ebene wie die Wippe - von der nachfolgend beispielhaft, aber nicht ausschließend die Rede sein soll - gestellt, so daß die Hubbewegung des Kopplungsgliedes direkt zu einer Höhenänderung des Teiles der Wippe führt, das an dem Kopplungsglied festgelegt ist, woraus die gewünschte Schaukelbewegung resultiert. Hierdurch ergibt sich der Vorteil, daß die Schaukelvorrichtung völlig unabhängig von Vorspannungen und Verfügbarkeit von Befestigungsstellen arbeitet und aufgrund des Fehlens von Kopplungselementen, Befestigungsleinen und dergleichen schnell und mühelos eingesetzt werden kann. Das Anbringen der Schaukelvorrichtung an der Wippe erfolgt ebenso einfach wie deren Entfernen: Man stellt lediglich die Schaukelvorrichtung unter eine der Wippenkufen bzw. unter eine Querstange zwischen den beiden Kufen, so daß das Kopplungsglied in Eingriff mit der Wippe gelangt.

Zusätzlich zum Schaukelantrieb ist eine aufziehbare Spieluhr vorgesehen, um neben einer Schaukelbewegung eine weitere Beruhigung des Kindes durch Abspielen von Musik zu ermöglichen. Nachteilig an dieser aufziehbaren Spieluhr ist jedoch die sehr begrenzte Abspieldauer, so daß der gewünschte Beruhigungseffekt durch ein baldiges und abruptes Ende der Musik wieder aufgehoben wird.

Bei einer aus DE-A-25 41 935 bekannten Schaukelvorrichtung wird der Nachteil der begrenzten Spieldauer einer Spieluhr dadurch umgangen, daß die Spieluhr direkt an den Schaukelantrieb angekoppelt ist und hierdurch immer dann läuft, wenn auch der Schaukelantrieb arbeitet. Diese Schaukelvorrichtung ist im übrigen wie folgt aufgebaut: Die Schaukelvorrichtung wird über spezielle unelastische Befestigungsleinen zwischen der Achse eines Kinderwagens und dem Schiebegriff montiert und verspannt. Die Schaukelvorrichtung selbst besteht aus einem Exzenterantrieb, der über ein Gestänge eine Hubbewegung erzeugt und mit Hilfe der Befestigungsleinen den Abstand zwischen Achse und Schiebegriff kontinuierlich verändert, woraus eine Schaukelbewegung des Kinderwagens resultiert.

Der wesentliche Nachteil dieser zwischen Achse und Schiebegriff verspannten Schaukelvorrichtung liegt darin, daß dabei die Federung des Kinderwagens verlorengeht, die ja erforderlich ist, um Bodenunebenheiten gegenüber dem Kinderwagenkorb abzufangen. Demzufolge wird beim Schieben des Kinderwagens der Vorteil des aufgezwungenen gleichmäßigen Schaukelns mit dem Nachteil der verlorengegangenen Federung und somit eines unruhigeren Fahrverhaltens erkauft, was dazu führt, daß vor dem Schieben des Kinderwagens über längere Distanzen die Schaukelvorrichtung mitsamt den Befestigungsleinen entfernt werden müssen unter gleichzeitiger Vorspannung des Abstandes zwischen Schiebegriff und Achse.

Noch umständlicher ist die Verwendung der bekannten Schaukelvorrichtung bei Kinderwippen, weil die Schaukelvorrichtung nur dann die Hubbewegung in eine Schaukelbewegung umsetzen kann, wenn die Befestigungsleinen zwischen der Kinderwippe und einem externen festen Punkte angebracht und vorgespannt werden können.

Hiervon ausgehend liegt der vorliegenden Erfindung die Aufgabe zugrunde, die bekannten Schaukelvorrichtungen mit Spieluhr hinsichtlich ihrer Funktionalität weiter zu verbessern. Diese Aufgabe wird erfindungsgemäß gelöst durch die Merkmale des kennzeichnenden Teils von Anspruch 1. Ein solcher Schaukelantrieb weist den großen Vorteil auf, daß die Spieluhr aufgrund ihrer Lösbarkeit auch einmal deaktiviert werden kann, also ein Schaukeln ohne Geräuschentwicklung möglich ist. Durch die Austauschbarkeit der Spieluhr kann der Schaukelantrieb darüber hinaus auch noch verschiedene Melodien abspielen, was wesentlich zu einer Erhöhung der Akzeptanz sowie des Nutzens der Schaukelvorrichtung beiträgt. Somit vereinigt die vorliegende Erfindung nicht nur die Vorteile des Standes der Technik unter Umgehung der zugehörigen Nachteile, sondern sie ermöglicht darüber hinaus auch noch dem Benutzer die Wahl, wie lange und mit welcher Melodie die Spieluhr laufen soll.

Wie auch bei der eingangs genannten US-A-4 985 949 ist es bei dem erfindungsgemäßen Schaukelantrieb möglich, die Kinderwippe direkt und ohne Zwischenelemente, Montagearbeiten und dergleichen anzutreiben. Dies kann über eine lösbare Steckverbindung, insbesondere eine Gabel, erfolgen, deren einer Zinken oberhalb und deren anderer Zinken unterhalb eines entsprechenden Teiles der Wippe angreift. Auf diese Weise braucht die Schaukelvorrichtung nur horizontal aufgesteckt zu werden, wobei man zur Anpassung an die Höhe des korrespondierenden Wippenteiles gegebenenfalls ein Buch oder dergleichen unter die Schaukelvorrichtung schiebt.

Wird gemäß einer später noch näher beschriebenen Ausbildung des Hubantriebes die Gabel nicht längs einer reinen vertikalen Hubbewegung angetrieben, sondern durch einen Exzenter, drehbar verlagert zu sein, damit sie während ihres Umlaufes ihre Position mit den übereinander liegenden Zinken beibehalten kann. In beiden Fällen stellt eine derartige formschlüssige Kopplung sicher, daß die Wippe in jeder Position der Hubbewegung der Schaukelvorrichtung folgt.

Besonders günstig ist es jedoch, die lösbare Verbindung zwischen Kopplungsglied und Wippe durch folgende, bezüglich des baulichen Aufwandes noch einfachere Festlegungsvariante zu realisieren: Bei geeigneter Wahl der Position der Schaukelvorrichtung unterhalb der Wippe kann die Gewichtskraft der Wippe zur Anlage zwischen Kopplungsglied und Wippe ausgenutzt werden. Hierbei muß der Anlagepunkt der Wippe durch deren Gewichtskraft immer in Richtung auf das Kopplungsglied gedrückt werden, um eine fortwährende Verbindung und somit eine kontinuierliche Übertragung der Hubbewegung auf die Wippe sicherzustellen. Das Kopplungsglied kann in diesem Fall als einfacher Hebel ausgebildet sein, der von unten an der Wippe angreift, weil nur noch eine Druck- bzw. Stützkraft erzeugt zu werden braucht.

Die erfindungsgemäße Lösung gewährleistet nicht nur das einfache Anbringen und Entfernen der Schaukelvorrichtung von der Wippe, sondern ermöglicht darüberhinaus auch einen vielseitigen Einsatz bei Wipp- bzw. Schaukelelementen wie z. B. bei einem Kinderwagen, bei dem die Schaukelvorrichtung in einfacher Weise unter eine der beiden Radachsen positioniert werden kann, woraufhin die Hubbewegung der Schaukelvorrichtung eine Schaukelbewegung des gesamten Kinderwagens erzeugt. Hier entfällt nicht nur jeder Montageaufwand, sondern die Schaukelbewegung kann sogar auch auf ungefederte Kinderwagen übertragen werden. Auch bei kleinen Kinderbetten, -tragetaschen und dergleichen kann die erfindungsgemäße Schaukelvorrichtung in einfacher Weise angewendet werden, wobei allerdings immer die Größe der Schaukelvorrichtung in angemessenem Verhältnis zur Größe des anzuhebenden Schaukelelementes stehen muß.

Denn während bei der Kinderwippe die auf die Schaukelvorrichtung ausgeübte Gewichtskraft gerade so groß sein muß, daß sich die Wippe in ständiger Anlage an das Kopplungsglied befindet, muß bei einer nicht-selbständig schaukelbaren Tragetasche, bei einem Kinderwagen oder einem Kinderbettchen jeweils etwa deren halbe Gewichtskraft angehoben werden.

In vorteilhafter Weise umfaßt der Hubantrieb einen Exzenter mit exzentrisch gelagertem Kopplungsglied in Form eines etwa horizontal vorstehenden Bolzens. Dieser Bolzen kann mit einer reibungsarmen Beschichtung versehen sein, damit er beim Umlauf keine störenden Geräusche durch seine Anlage an dem korrespondierenden Wippteil verursacht oder der Bolzen trägt ein Kugellager, dessen Außenring mit dem Wippenteil in Eingriff steht.

Für die Ausbildung des Hubantriebes kommt ein (Klein-)-Elektromotor in Betracht, der durch Zahnräder, einen Schneckenantrieb o. ä. untersetzt wird. Statt dessen kann aber auch ein fertiger Getriebemotor verwendet werden.

Besonders vorteilhaft ist es, wenn die Schaukelvorrichtung selbst höhenverstellbar ausgeführt ist, wodurch sie an die jeweiligen Anwendungsgebiete angepaßt und auch schnell für einen anderen Anwendungsfall umgerüstet werden kann. Diese Höhenverstellung kann beispielsweise in einer Schraubvorrichtung oder in Steckeinsätzen bestehen.

Ein wesentlicher Vorteil der vorliegenden Erfindung ist dann gegeben, wenn die Antriebsteile des Hubantriebes von einem Gehäuse umgeben sind, um so jegliche Verletzungsgefahr durch ein Eingreifen in die sich bewegenden Teile zu verhindern. Insbesondere bei Verwendung eines Exzenterantriebes wird hierdurch sichergestellt, daß die großen, vom Antriebsglied ausgeübten Antriebskräfte sicher gegenüber der Umgebung abgeschirmt werden.

Weniger wesentlich, aber ebenso vorteilhaft ist es, wenn die Verbindung des Kopplungsgliedes mit der Wippe abgeschirmt ist, indem beispielsweise die Wippe während der Hubbewegung in das Gehäuse eintaucht. Würde man zwischen Wippe und Kopplungsglied beziehungsweise Gehäuse eingreifen, so wären lediglich die jeweiligen Gewichtskräfte der Wippe wirksam, die nur ein Bruchteil von den Antriebskräften des Exzenterantriebes betragen.

Sowohl für die Schaukelvorrichtung selbst als auch für den Hubantrieb sind verschiedene vorteilhafte Zusatzeinrichtungen denkbar: So kann beispielsweise beim Hubantrieb eine Intervallschaltung vorgesehen werden, die jeweils zwei Hubbewegungszyklen durch eine längere Phase des Stillstandes des Hubantriebes unterbricht. Darüberhinaus kann eine Steuerung zum automatischen Wiederanlauf vorgesehen sein, die auf einen vorbestimmten Geräuschpegel anspricht, um so den Hubantrieb immer dann zu betätigen, wenn ein in der Kinderwippe liegendes Kind beruhigt werden muß.

Schließlich liegt ein anderer erfindungsgemäßer Vorteil darin, wenn eine Schaukelvorrichtung neben einem Hubantrieb eine Spieluhr aufweist, die zweckmäßigerweise zumindest mittelbar an den Hubantrieb angekoppelt und durch die Bewegung des Hubantriebes betätigbar ist. So kann beispielsweise die Kopplung mechanisch erfolgen bei einer mechanisch betätigbaren Spieluhr, so daß die Spieluhr über ein ihr zugeordnetes Antriebsglied mit einem Getriebeglied des Hubantriebs in Eingriff steht und jeweils nur dann läuft, wenn auch der Hubantrieb betätigt wird. Diese Kopplung kann natürlich auch elektronisch erfolgen, wobei hierbei auch die Spieluhr etwa aus einem Mikrochip bestehen kann. Insbesondere aber die mechanisch betätigbare Spieluhr nutzt über die mechanische Kopplung ohnehin vorhandene Komponenten des Hubantriebes und bietet der Hubbewegung auch keinen größeren Widerstand. Ähnlich der Steuerung zum automatischen Wiederanlauf bei Überschreiten eines bestimmten Geräuschpegels gewährleistet auch hier die mit dem Hubantrieb verbundene Spieluhr, daß eine Geräuscheinwirkung durch die Spieluhr nur während der Schaukelphase, also während das Kind beruhigt werden soll, erfolgt, während in der Ruhephase auch die Spieluhr nicht arbeitet.

Es ist darüberhinaus besonders vorteilhaft, wenn die Spieluhr lösbar und austauschbar ausgeführt ist, wobei sie zum einen für eine geräuschlose Hubbewegung aus dem Eingriff mit dem Hubantrieb gebracht werden kann und zum anderen gegen eine andere Spieluhr ausgetauscht und so bei der gleichen Schaukelvorrichtung unterschiedliche Melodien abgespielt werden können.

Was die Form und das Aussehen der Schaukelvorrichtung betrifft, so ist diese vorteilhafterweise einem menschlichen oder tierischen Kopf nachempfunden, um zum einen die funktionswesentlichen Teile zu betonen und deren leichtere Zuordnung zu ermöglichen, und um sich zum anderen der in der Regel kindgerecht gestalteten Umgebung einer Kinderwippe anzupassen. Ist die Schaukelvorrichtung mit einem Schalter zum Ein-/Ausschalten des Hubantriebes versehen, so kann dieser in einen Teil der kopfförmigen Schaukelvorrichtung integriert sein, beispielsweise in die Nase. Dieser Teil des Kopfes kann darüberhinaus auch zur Aufnahme der Spieluhr dienen, wobei in diesem Fall auch der gesamte Schalter zusammen mit der Spieluhr mit ausgewechselt werden kann. Neben dem Ein-/Ausschalten des Hubantriebes kann der Schalter darüberhinaus dazu verwendet werden, die Betätigung der Spieluhr und deren Kopplung mit dem Hubantrieb zu steuern.

Wie auch immer die Schaukelvorrichtung ausgebildet bzw. ausgestattet sein mag, in jedem Fall empfiehlt es sich, diese zur Anpassung des Angriffspunktes des Hubantriebes an die Kinderwippe höhenverstellbar auszuführen. Dies kann beispielsweise über zwei vertikal gegeneinander verschiebbare Gehäuseteile erfolgen, wobei zur gegenseitigen Festlegung in unterschiedlichen Höhenpositionen an beiden Gehäuseteilen miteinander korrespondierende Rastmittel vorgesehen sein können. Einfache Rastmittel können beispielsweise aus einer insbesondere federnd nachgiebig ausgeführten Zahnleiste und einem in die Zahnleiste eingreifenden Anschlag bestehen, wobei die Zahlleiste am besten von der Gehäuseaußenseite her zugänglich ist. Bei einem einem Kopf nachempfundenen Gehäuse kann die Höhenverstellung beispielsweise im Halsbereich angeordnet sein.

Weitere Vorteile und Merkmale der vorliegenden Erfindung ergeben sich aus der nachfolgenden Beschreibung von Ausführungsbeispielen anhand der Zeichnungen; hierbei zeigen
- Figur 1: eine Kinderwippe mit erfindungsgemäßer Schaukelvorrichtung in Seitenansicht;
- Figur 2: die Schaukelvorrichtung in vergrößertem Seitenschnitt;
- Figur 3: die Schaukelvorrichtung aus Figur 2 in geschnittener Vorderansicht;
- Figuren 4 - 7: alternative Ausführungsformen einer Schaukelvorrichtung in geschnittener Seitenansicht;
- Figur 8: eine Kinderwippe mit einer weiteren erfindungsgemäßen Schaukelvorrichtung in Seitenansicht;
- Figur 9: die Schaukelvorrichtung aus Figur 8 in geschnittener Seitenansicht;
- Figur 10: die Schaukelvorrichtung aus Figur 8 in geschnittener Draufsicht;
- Figuren 11 + 12: die Schaukelvorrichtung aus Figur 8 in geschnittener Vorderansicht;
- Figuren 13 - 14: ein Höhenverstellmechanismus der Schaukelvorrichtung aus Figur 3 in Einzeldarstellung; und
- Figuren 16 + 17: ein Detail der Schaukelvorrichtung aus Figur 8 in geschnittener Vorderansicht.

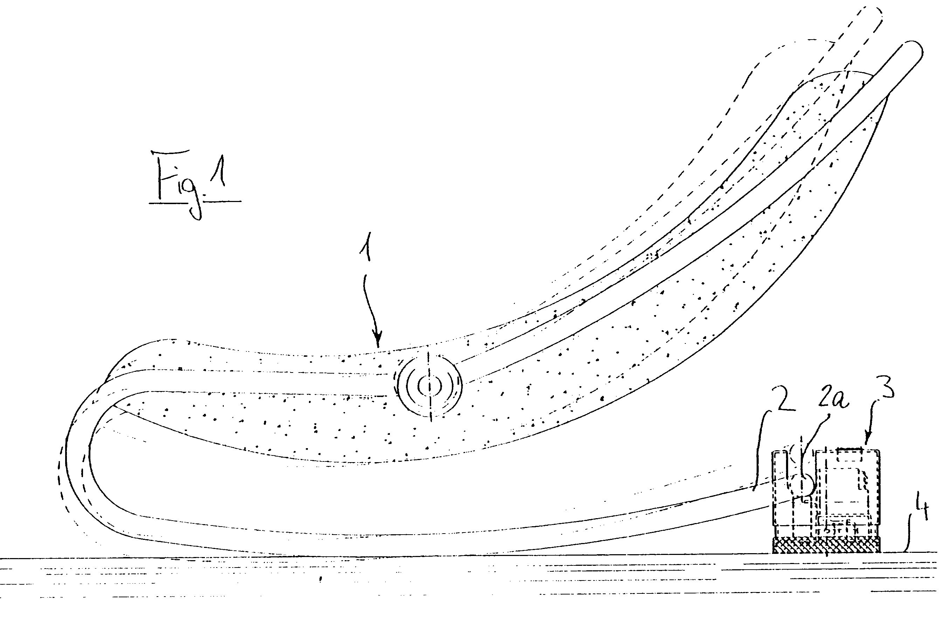

In Figur 1 ist eine Kinderwippe 1 dargestellt, an deren freien Kufenende 2 eine Schaukelvorrichtung 3 vorgesehen ist, die mit einer Querstange 2 a in Eingriff steht. Diese Schaukelvorrichtung 3, deren genauer Aufbau aus den Figuren 2 - 6 deutlicher erkennbar ist, steht auf derselben Ebene 4 wie die Kinderwippe. Selbstverständlich kann es aber auch notwendig sein, die Schaukelvorrichtung durch eine entsprechende Unterlage etwas höher zu positionieren, damit die gewünschte Anlage zwischen der Querstange 2 a der Wippe und der Schaukelvorrichtung gewährleistet ist.

Figur 2 zeigt eine erfindungsgemäße Schaukelvorrichtung 13, die aus einem zylinderförmigen Gehäuse 14 besteht. In diesem Gehäuse ist für das freie Wippenkufenende 2 a von oben her ein Schlitz 15 eingefügt, entlang dem sich die Kufe entsprechend der Hubbewegung der Schaukelvorrichtung bewegen kann. Die Hubbewegung selbst wird von einem Hubantrieb 16 erzeugt, der aus einem Kleinmotor 17, aus einer Schnecke 18, einem Stirnrad 19 und einem exzentrisch an dem Stirnrad angeordneten, etwa horizontal vorstehenden Bolzen 20 besteht. Hierbei überträgt der Kleinmotor eine Drehbewegung auf die Schnecke 18, die wiederum eine Drehbewegung um eine hierzu senkrechte Achse auf das Stirnrad 19 überträgt, wodurch der Bolzen 20 auf einer Kreisbahn bewegt wird. Das Wippenkufenende 2, das sich in Anlage an dem Bolzen 20 befindet, wird hierdurch entsprechend den Höhenänderungen, die der Bolzen auf seiner Kreisbewegung durch-schreitet, angehoben bzw. abgesenkt.

Wie in Figur 1 in gestrichelter Weise angedeutet ist, führt diese Hubbewegung des Wippenkufenendes 2 a zu einer Schaukelbewegung der gesamten Kinderwippe 1.

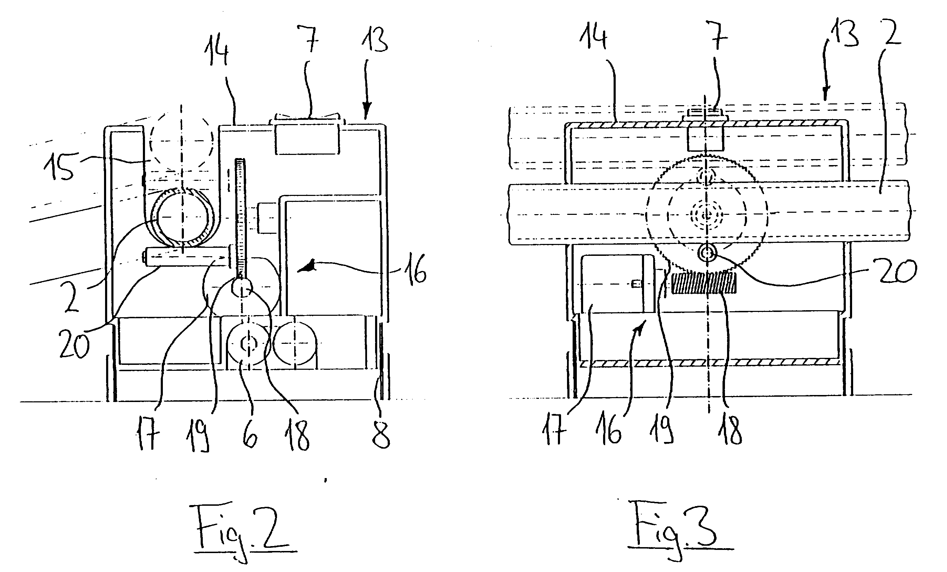

Figur 3 zeigt die Schaukelvorrichtung 13 aus Figur 2 mit den entsprechenden Komponenten in geschnittener Vorderansicht.

In Figur 4 ist eine alternative Bauform einer Schaukelvorrichtung 23 dargestellt, die einen Hubantrieb 26 aufweist. Dieser Hubantrieb 26 besteht aus einem Kleinstgetriebemotor 27, der eine Exzenterscheibe 30 antreibt. Während in Figur 2 der Bolzen 20 exzentrisch am Stirnrad 19 angeordnet ist, wobei aber die Mittelachse der Antriebswelle mit ihrer Drehachse übereinstimmt, ist nun die Mittelachse der Exzenterscheibe 30 relativ zu ihrer Drehachse versetzt. Auch hier überträgt der Kleinstgetriebemotor 27 eine Drehbewegung auf die Exzenterscheibe, die eine entsprechende Höhenveränderung des Wippenkufenendes 2 a und eine Schaukelbewegung der Wippe 1 hervorruft.

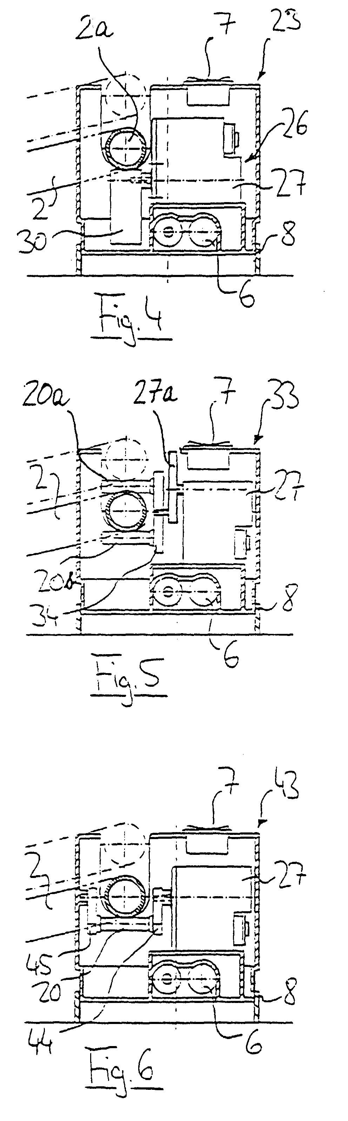

Figur 5 zeigt eine weitere Alternative. Dabei treibt der Antriebsmotor 27 über eine Exzenterscheibe 27 a eine daran drehbar gelagerte Gabel 34 mit zwei horizontal vorstehenden und übereinander angeordneten Bolzen 20 a und 20 b, die zwischen sich das Wippenkufenende 2 a oder ein entsprechendes anderes Teil der Wippe aufnehmen. Zweckmäßig ist der Abstand zwischen den Bolzen 20 a und 20 b verstellbar, etwa durch eine Rast- oder Schnappverbindung oder dergleichen, um ihn an unterschiedliche Abmessungen des korrespondierenden Wippenteiles 2 a anzupassen. Wichtig ist außerdem, daß die Gabel 34 ihrerseits verdrehbar an dem Exzenter 27 a gelagert ist, so daß deren Drehbewegungen eine Hubbewegung der Gabel 34 erzeugen, in deren Verlauf die Bolzen 20 a und 20 b weitgehend in Vertikalrichtung übereinander stehen bleiben.

Da das Wippenende 2 a bei dieser Bauform sowohl von oben wie auch von unten erfaßt wird, braucht man keine Rücksicht auf die gewichtsbedingte Anpressung zu nehmen, wie dies bei den vorherigen Bauformen der Fall war. Es muß lediglich sichergestellt sein, daß das Eigengewicht der Schaukelvorrichtung 33 groß genug ist, damit es nicht durch die Wippe vom Boden abgehoben werden kann.

Hier kann es wie auch bei den übrigen Ausführungsbeispielen zweckmäßig sein, das Exzentermaß verstellbar zu machen, um die Größe der Hubbewegung zu beeinflussen. Zweckmäßig erfolgt diese Verstellung ebenfalls nur durch Schnapp- oder Klemmittel, damit keine Werkzeuge benötigt werden.

In Figur 6 ist eine Bauform dargestellt, bei der der Kleinstgetriebemotor 27 die Drehbewegungen auf den exzentrisch gelagerten Bolzen 20 überträgt, der aber in diesem Fall nicht über eine Drehscheibe 34, sondern vielmehr über zwei Kurbelarme 44 und 45 an seinen beiden Enden gelagert ist.

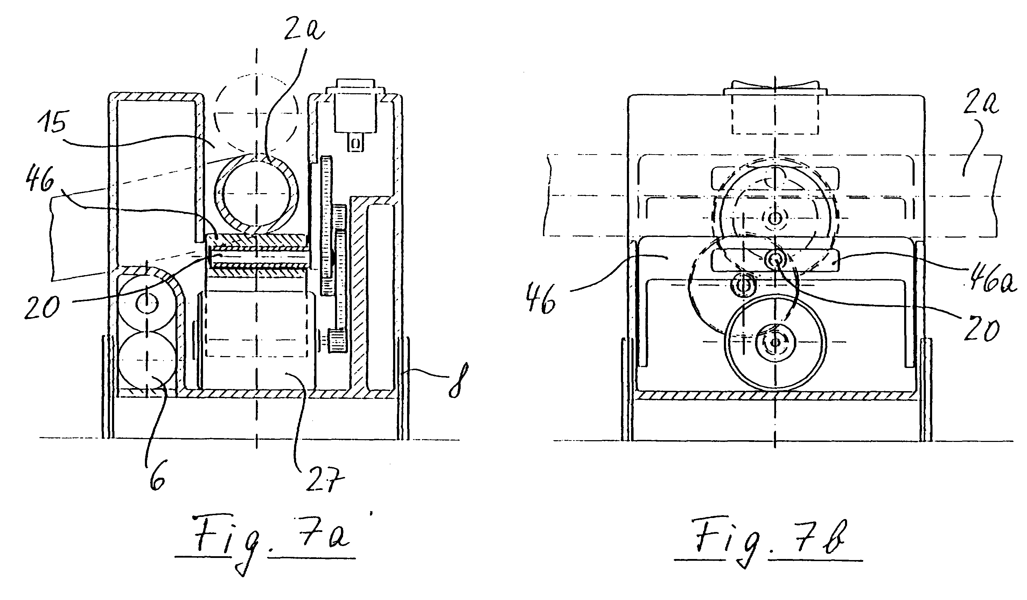

Die Bauform in Figur 7 zeichnet sich dadurch aus, daß das Kopplungsglied 20 in einem beweglichen Stempel 46 gelagert ist. Dieser Stempel ist so dimensioniert, daß er den horizontalen Querschnitt des Schlitzes 15, in dem sich die Hubbewegung abspielt, ausfüllt. Dieser Stempel macht die Hubbewegung des Kopplungsgliedes mit, jedoch ohne dessen seitliche Bewegungen. Er weist hierzu einen etwa horizonalen Schlitz 46 a auf, in dem der Bolzen des Kopplungsgliedes gelagert ist und dessen Länge der Horizontalbewegung des Bolzens 20 entspricht. Auf diese Weise ist das Berühren des rotierenden Bolzens und somit die Gefahr des Einklemmens eines Kinderfingers zwischen Gehäuse und Kopplungsglied ausgeschlossen.

Allen Bauformen ist schließlich noch gemeinsam, daß die Schaukelvorrichtungen über Batterien 6 angetrieben werden, wobei jedoch auch andere Arten der Strom- bzw. Energiezufuhr denkbar sind. Darüberhinaus weisen alle Bauformen einen Ein-Ausschalter 7 auf, sowie an dem jeweiligen Sockel der Schaukelvorrichtung eine Höhenverstellung 8.

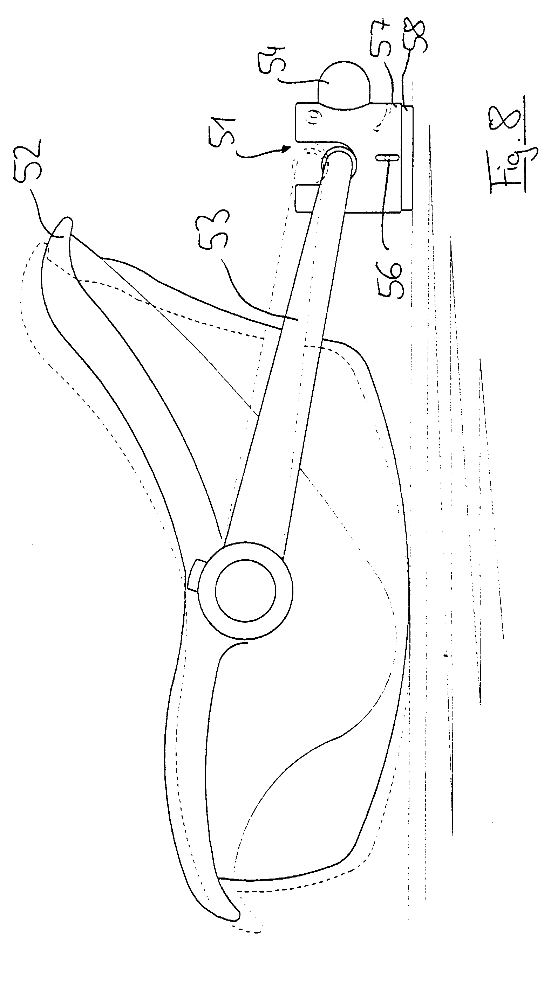

Figur 8 zeigt eine weitere Ausführungsform einer Schaukelvorrichtung 51 für eine Kinderwippe 52, wobei die Kinderwippe mit der Schaukelvorrichtung über einen Tragegriff 53 in Eingriff steht. Wie aus der Seitenansicht in Figur 8 ersichtlich, weist die Schaukelvorrichtung 51 eine Form und ein Aussehen auf, das einem menschlichen Kopf nachempfunden ist. Hierdurch läßt sich zum einen der technische Charakter der Schaukelvorrichtung etwas kaschieren, zum anderen aber auch eine Verdeutlichung der einzelnen Funktionsteile erzielen: Denn in der nicht nur räumlich hervorgehobenen Nase 54 der Schaukelvorrichtung ist sowohl der Schalter zum Ein-/Ausschalten des Hubantriebes als auch eine - aus den nachfolgenden Figuren ersichtliche - Spieluhr 55 angeordnet. Darüberhinaus ist in dem unteren Teil des Kopfes, also im Halsbereich, eine Höhenverstelleinrichtung 56 integriert, durch die die Schaukelvorrichtung in ihrer Grundstellung an die optimale Eingriffsposition der Kinderwippe anpaßbar ist. Wie deutlicher aus den nachfolgenden Figuren ersichtlich ist, werden durch die Höhenverstelleinrichtung 56 zwei Gehäuseteile 57 und 58 teleskopartig gegen- bzw. ineinander verschoben.

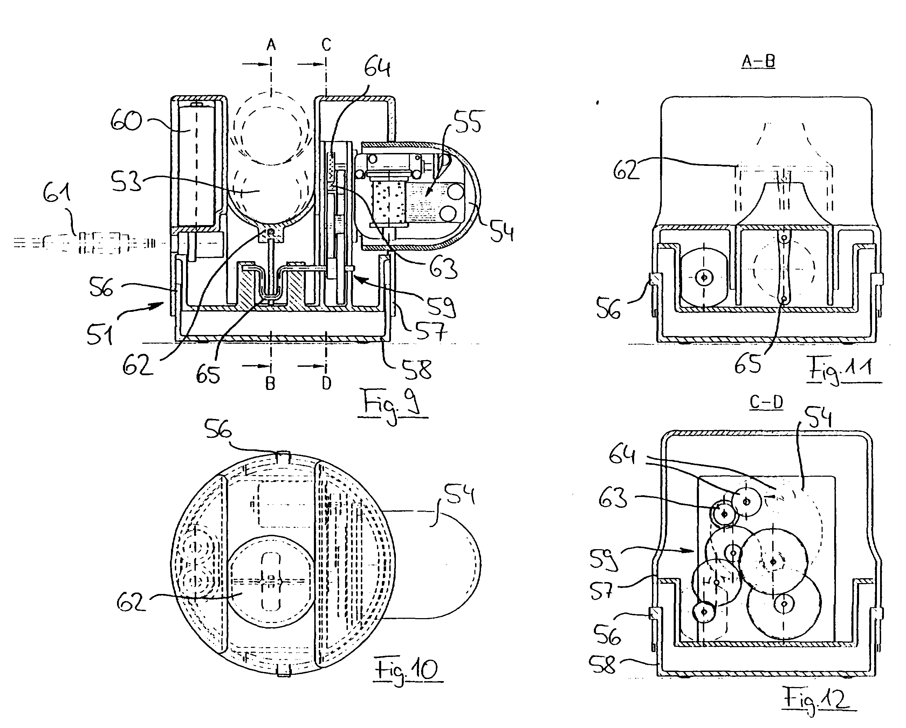

Figur 9 zeigt die Schaukelvorrichtung 51 in geschnittener Darstellung und verdeutlicht insbesondere den Antriebsmechnismus zur Erzeugung der Hubbewegung und zum Betätigen der Spieluhr. Hierzu wird ein Exzenterantrieb 59 über eine Batterie 60 oder einen (in Figur 9 gestrichelt dargestellten) Niedervoltstecker 61 mit Strom versorgt und überträgt so die Drehbewegung des Exzenterantriebes 59 auf einen hieran exzentrisch gelagerten Hubstempel 62, auf dem der Tragegriff 53 der Kinderwippe 52 aufliegt. Dieser Hubstempel 62 wird durch den Exzenterantrieb 59 auf und ab bewegt und erzeugt so ein Verschwenken der Wippe 52 über deren Unterseite, wodurch sie eine Schaukelbewegung durchführt.

An einem während des Arbeitens des Hubantriebes sich drehenden Getriebeglied 63 des Exzenterantriebes ist ein Antriebsglied 64 mechanisch ankoppelbar, welches die Drehbewegung auf die Spieluhr 55 im eingekoppelten Zustand überträgt. Das mechanische Ankoppeln ist insbesondere in Figur 12 erkennbar, die einen Schnitt entlang der Linie C-D aus Figur 9 darstellt: Hier ist im oberen Bereich das Antriebsglied 64 zum einen gestrichelt und zum anderen mit durchgezogener Linie dargestellt. Im gestrichelten Zustand befindet sich das Antriebsgleid 64 nicht im Eingriff mit dem Getriebeglied 63 des Exzenterantriebes 59, während ein Drehen der ebenfalls gestrichelt dargestellten Nase 54 zu einer durch den Pfeil in Figur 12 angedeuteten Verschwenkung des Antriebsgliedes 64 führt, an deren Ende das Antriebsglied an das Getriebeglied angreift. In diesem Zustand wird die Antriebsbewegung des Exzenterantriebes 59 auf das Antriebsglied 64 und hierdurch auf die Spieluhr 55 übertragen.

Figur 10 zeigt die Schaukelvorrichtung 51 in Draufsicht und läßt insbesondere zusammen mit Figur 9 die Form des Hubkolbens 62 erkennen, der darüberhinaus auch in Figur 11 dargestellt ist, einer Schnittdarstellung entlang der Linie A-B aus Figur 9.

In Figur 11 sind zum einen die beiden Totpunkte der Hubbewegung des Hubkolbens 62 dargestellt und darüberhinaus auch der vom Exzenterantrieb 59 durchfahrene Radius der mit der Hubkolbenunterseite in Eingriff stehenden Exzenterwelle 65, die in Figur 9 in Seitenansicht dargestellt ist.

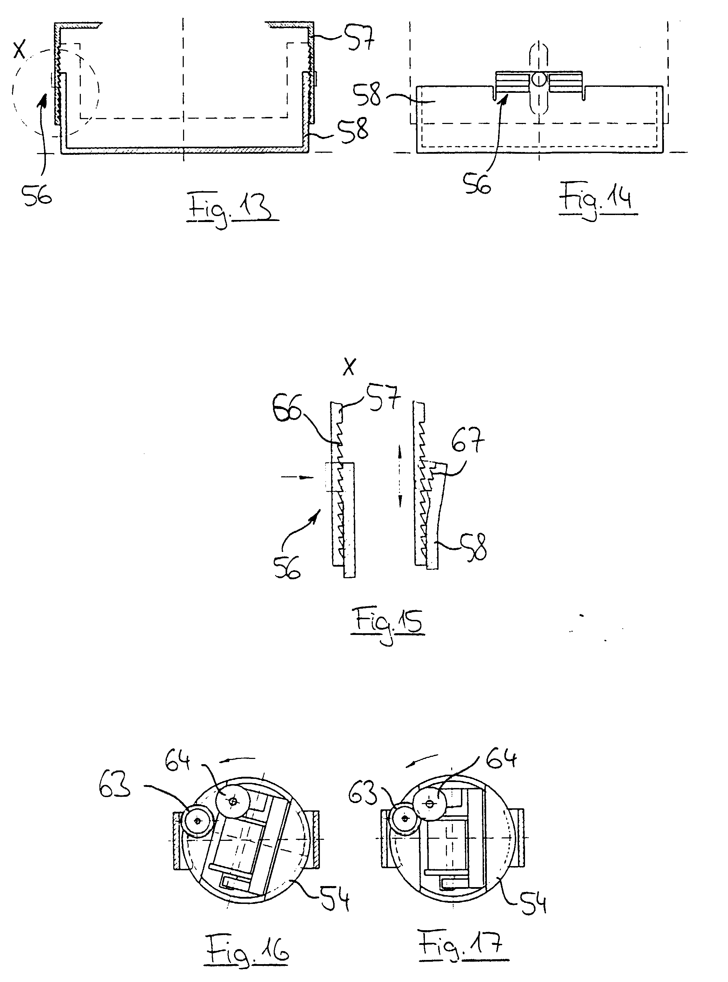

Die Figuren 13 bis 15 verdeutlichen die in Figur 8 bereits angedeutete und in den Figuren 9 bis 11 ebenfalls zu erkennende Höhenverstelleinrichtung 56, die aus einer Rastverbindung zwischen den beiden ineinander angeordneten Gehäuseteilen 57 und 58 besteht. Hierzu weißt die obere Gehäusehälfte 57 eine vertikale Zahnleiste 66 mit übereinander angeordneten Rastnasen auf, während die untere Gehäusehälfte 58 hierin eingreifende entsprechend ausgebildete Anschläge 67 umfaßt.

Eines der beiden Rastmittel muß etwas in Horizontalrichtung nachgiebig ausgebildet sein, so daß eine Relativverschiebung beider Gehäusehälften möglich ist, indem sie gegenseitig außer Eingriff gebracht werden. möglich ist. Das hierbei verwendete Prinzip ist in Figur 15 schematisch verdeutlicht.

Die Figuren 16 und 17 zeigen schließlich noch einmal das in Figur 12 bereits angedeutete Verschwenken der Nase, wodurch das Antriebsglied 64 der Spieluhr mit dem Getriebeglied 63 des Exzenterantriebes in Eingriff bringbar ist. Bei einer Stellung gemäß Figur 16 kann der Exzenterantrieb eine Hubbewegung auf den Hubkolben 62 bzw. die Wippe 52 übertragen, ohne daß dies mit einer Geräuschentwicklung durch die Spieluhr 55 verbunden wäre.

Zusammenfassend liegen die Vorteile der vorliegenden Erfindung darin, daß zum einen eine Verletzungsgefahr durch Kaschieren der Hubantriebeskomponenten, weitgehend ausgeschlossen wird, daß die ohnehin für die Hubbewegung erforderliche Bewegung des Exzenterantriebes auch gleichzeitig zum Antreiben einer Spieluhr verwendet wird, die auch nur dann läuft, wenn der Hubantrieb aktiviert ist, und schließlich daß der Schalter zum Ein-/Ausschalten des Hubantriebes dadurch hervorgehoben bzw. betont ist, daß er bei einem in Form und Aussehen einem menschlichen Kopf nachgebildeten Gehäuse ebenfalls in Form eines Teils dieses Kopfes ausgebildet ist. Dieser Teil kann darüberhinaus auch zur Aufnahme der Spieluhr dienen, die zweckmäßigerweise leicht demontiert und gegen eine andere Spieluhr ausgetauscht werden kann.

## Patentansprüche

1. Vorrichtung zur Erzeugung einer Schaukelbewegung bei Kinderwippen und dergleichen, bestehend aus einem Hubantrieb mit Kopplungsglied, wobei das Kopplungsglied (20, 30, 34) des Hubantriebes (16, 26) ohne Zwischenelemente und Montagearbeiten unmittelbar in lösbarer Weise mit der Wippe (1) in Eingriff bringbar ist, wobei die Schaukelvorrichtung (51) eine Spieluhr (55) aufweist, und wobei die Spieluhr (55) mechanisch betätigbar ist,
dadurch gekennzeichnet,
daß die Spieluhr (55) zumindest mittelbar an den Hubantrieb (59) angekoppelt ist und durch die Bewegung des Hubantriebes betätigbar ist,
daß die Kopplung mechanisch erfolgt, daß die Spieluhr ein Antriebsglied (64) aufweist, über das sie mit einem Getriebeglied (63) des Hubantriebes (59) in Eingriff steht, und daß die Spieluhr (55) lösbar und austauschbar ausgeführt ist.

2. Vorrichtung nach Anspruch 1,
dadurch gekennzeichnet,
daß die Schaukelvorrichtung (51) in Form und Aussehen einem menschlichen oder tierischen Kopf nachempfunden ist und einen Schalter (54) zum Ein-/Ausschalten des Hubantriebes (59) aufweist, der in einen Teil des Kopfes, insbesondere in der Nase, integriert ist.

3. Vorrichtung nach Anspruch 1 und Anspruch 2,
dadurch gekennzeichnet,
daß die Spieluhr (55) in den den Schalter (54) aufweisenden Teil des Kopfes integriert ist.

4. Vorrichtung nach Anspruch 2 und Anspruch 1,
dadurch gekennzeichnet,
daß der Schalter (54) zum Ein-/Ausschalten des Hubantriebes (59) die Betätigung der Spieluhr (55) steuert.

5. Vorrichtung gemäß Anspruch 1,
dadurch gekennzeichnet,
daß der Eingriff des Kopplungsgliedes (20, 30, 34) an der Wippe (1) über eine lösbare Steckverbindung erfolgt.

6. Vorrichtung gemäß Anspruch 5,
dadurch gekennzeichnet,
daß das Kopplungsglied als Bolzen (20), als Gabel (34) oder als Hubstempel (46) ausgebildet ist.

7. Vorrichtung gemäß Anspruch 1,
dadurch gekennzeichnet,
daß der Eingriff des Kopplungsgliedes (20, 30, 46) an der Wippe (1) über die Gewichtskraft der Wippe erfolgt.

8. Vorrichtung gemäß Anspruch 1,
dadurch gekennzeichnet,
daß der Hubantrieb (16, 26) einen Exzenter als Kopplungsglied (20, 30) aufweist.

9. Vorrichtung gemäß Anspruch 8,
dadurch gekennzeichnet,
daß die Exzentrizität des Kopplungsgliedes (20, 30) verstellbar ist.

10. Vorrichtung gemäß Anspruch 1,
dadurch gekennzeichnet,
daß der Hubantrieb ein Schneckengetriebe (16) umfaßt.

11. Vorrichtung gemäß Anspruch 1,
dadurch gekennzeichnet,
daß der Hubantrieb (26) einen Getriebemotor (27) aufweist.

12. Vorrichtung gemäß Anspruch 1,
dadurch gekennzeichnet,
daß der Hubantrieb eine Intervallschaltung aufweist.

13. Vorrichtung gemäß Anspruch 1,
dadurch gekennzeichnet,
daß der Hubantrieb eine Steuerung zum automatischen Wiederanlauf aufweist, wobei die Steuerung auf einen vorbestimmten Geräuschpegel anspricht.

14. Vorrichtung nach Anspruch 1,
dadurch gekennzeichnet,
daß der Hubantrieb (16, 26) von einem Gehäuse umgeben ist.

15. Vorrichtung nach Anspruch 1,
dadurch gekennzeichnet,
daß die Schaukelvorrichtung (51) zur Anpassung des Angriffspunktes des Hubantriebes (59) an die Kinderwippe (52) höhenverstellbar ausgeführt ist.

16. Vorrichtung nach Anspruch 15,
dadurch gekennzeichnet,
daß die Höhenverstellung über zwei vertikal gegeneinander verschiebbare Gehäuseteile (57) erfolgt, die den Hubantrieb (59) umschließen, und daß zur gegenseitigen Festlegung in unterschiedlichen Höhenpositionen an beiden Gehäuseteilen miteinander korrespondierende Rastmittel (66, 67) vorgesehen sind.

17. Vorrichtung nach Anspruch 16,
dadurch gekennzeichnet,
daß die Rastmittel (66, 67) aus einer insbesondere federnd nachgiebig ausgeführten Zahnleiste und einem in die Zahnleiste eingreifenden Anschlag bestehen.

## Claims

1. Device to produce a rocking motion in children's cradles or similar, comprising a lifting drive mechanism with a coupling component, such that the coupling component (20, 30, 34) of the lifting drive mechanism (16, 26) can be brought into engagement directly with the cradle (1) without intermediate elements and assembly work, in a detachable manner, such that the rocking device (51) has a musical clock (55), and such that the musical clock (55) can be operated mechanically,
**characterised in that**
the musical clock (55) is at least indirectly connected to the lifting drive mechanism (59) and can be operated through the movement of the lifting drive mechanism, the connection is made mechanically, the musical clock has a drive component (64) through which it engages with a gear component (63) of the lifting drive mechanism (59), and the musical clock (55) is designed to be detachable and exchangeable.

2. Device according to Claim 1,
**characterised in that**
the rocking device (51) is modelled in the form and appearance of a human or animal head and has a switch (54) for switching the lifting drive mechanism (59) on and off, which is integrated into a part of the head, especially the nose.

3. Device according to Claim 1 and Claim 2,
**characterised in that**
the musical clock (55) is integrated into the part of the head incorporating the switch (54).

4. Device according to Claim 2 and Claim 1,
**characterised in that**
the switch (54) for switching the lifting drive mechanism (59) on and off controls the actuation of the musical clock (55).

5. Device according to Claim 1,
**characterised in that**
engagement of the coupling component (20, 30, 34) with the cradle (1) takes place by means of a detachable push connection.

6. Device according to Claim 5,
**characterised in that**
the coupling component is designed as a bolt (20), a fork (34) or a lifting plunger (46).

7. Device according to Claim 1,
**characterised in that**
engagement of the coupling component (20, 30, 46) with the cradle (1) takes place by means of the weight of the cradle.

8. Device according to Claim 1,
**characterised in that**
the lifting drive mechanism (16, 26) has a cam as the coupling component (20, 30).

9. Device according to Claim 8,
**characterised in that**
the eccentricity of the coupling component (20, 30) is adjustable.

10. Device according to Claim 1,
**characterised in that**
the lifting drive mechanism includes a worm gear (16).

11. Device according to Claim 1,
**characterised in that**
the lifting drive mechanism (26) includes a geared motor (27).

12. Device according to Claim 1,
**characterised in that**
the lifting drive mechanism has an interval circuit.

13. Device according to Claim 1,
**characterised in that**
the lifting drive mechanism has a control system for automatic restarting, such that the control system responds to a predetermined sound level.

14. Device according to Claim 1,
**characterised in that**
the lifting drive mechanism (16, 26) is surrounded by a housing.

15. Device according to Claim 1,
**characterised in that**
the rocking device (51) is designed to be adjustable for height to adjust the engagement point of the lifting drive mechanism (59) to the child's cradle (52).

16. Device according to Claim 15,
**characterised in that**
the height adjustment is carried out by means of two housing sections (57) vertically adjustable relative to each other, which enclose the lifting drive mechanism (59), and that for mutual fixing at different height positions, means of detent (66, 67) corresponding with each other are provided on both housing sections.

17. Device according to Claim 16,
**characterised in that**
the means of detent (66, 67) consist of a, particularly, spring-loaded flexible toothed strip and a catch engaging in the toothed strip.

## Revendications

1. Dispositif pour la création d'un mouvement à bascule dans le cas de balançoires pour enfants ou articles similaires, composé d'un entraînement de levage avec élément de couplage, l'élément de couplage (20, 30, 34) de l'entraînement de levage (16, 26) pouvant être engagé directement avec la balançoire (1) de manière amovible sans élément intermédiaire ni travaux de montage, le dispositif à bascule (51) présentant une boîte à musique (55), et la boîte à musique (55) pouvant être actionnée mécaniquement, **caractérisé en ce que** la boîte à musique (55) est couplée au moins indirectement à l'entraînement de levage (59) et peut être actionnée par le mouvement de l'entraînement de levage, en ce que le couplage est réalisé de façon mécanique, en ce que la boîte à musique présente un élément d'entraînement (64), au moyen duquel elle est en prise avec un organe d'engrenage (63) de l'entraînement de levage (59), et en ce que la boîte à musique (55) est exécutée de façon amovible et est interchangeable.

2. Dispositif selon la revendication 1, **caractérisé en ce que** la forme et l'aspect du dispositif à bascule (51) ressemble à une tête humaine ou une tête d'animal et présente un interrupteur (54), pour la mise en marche et l'arrêt de l'entraînement de levage (59), intégré dans une partie de la tête, notamment dans le nez.

3. Dispositif selon la revendication 1 et la revendication 2, **caractérisé en ce que** la boîte à musique (55) est intégrée dans la partie de la tête présentant l'interrupteur (54).

4. Dispositif selon la revendication 2 et la revendication 1, **caractérisé en ce que** l'interrupteur (54) pour la mise en marche et l'arrêt de l'entraînement de levage (59) commande l'actionnement de la boîte à musique (55).

5. Dispositif selon la revendication 1, **caractérisé en ce que** la prise de l'élément de couplage (20, 30, 34) est réalisée sur la balançoire (1) à l'aide d'une connexion enfichable amovible.

6. Dispositif selon la revendication 5, **caractérisé en ce que** l'élément de couplage est formé comme boulon (20), comme fourche (34) ou comme montant de levage (46).

7. Dispositif selon la revendication 1, **caractérisé en ce que** la prise de l'élément de couplage (20, 30, 46) sur la balançoire (1) est réalisée à l'aide du poids de la balançoire.

8. Dispositif selon la revendication 1, **caractérisé en ce que** l'entraînement de levage (16, 26) présente un excentrique comme élément de couplage (20, 30).

9. Dispositif selon la revendication 8, **caractérisé en ce que** l'excentricité de l'élément de couplage (20, 30) est réglable.

10. Dispositif selon la revendication 1, **caractérisé en ce que** l'entraînement de levage comprend un engrenage à vis sans fin (16).

11. Dispositif selon la revendication 1, **caractérisé en ce que** l'entraînement de levage (26) présente un moteur-réducteur (27).

12. Dispositif selon la revendication 1, **caractérisé en ce que** l'entraînement de levage présente un circuit intermittent.

13. Dispositif selon la revendication 1, **caractérisé en ce que** l'entraînement de levage présente une commande pour le redémarrage automatique, la commande réagissant à un niveau de bruit prédéfini.

14. Dispositif selon la revendication 1, **caractérisé en ce que** l'entraînement de levage (16, 26) est entouré d'un boîtier.

15. Dispositif selon la revendication 1, **caractérisé en ce que** le dispositif à bascule (51) est exécuté de façon à être réglable en hauteur pour l'adaptation du point de prise de l'entraînement de levage (59) sur la balançoire pour enfants (52).

16. Dispositif selon la revendication 15, **caractérisé en ce que** le réglage en hauteur est réalisé à l'aide de deux pièces de boîtier (57), déplaçables verticalement l'une contre l'autre, qui entourent l'entraînement de levage (59), et en ce que des organes à crans (66, 67) correspondants l'un par rapport à l'autre sont prévus sur les deux pièces de boîtier pour la fixation mutuelle à différentes hauteurs.

17. Dispositif selon la revendication 16, **caractérisé en ce que** les organes à crans (66, 67) sont composés d'une crémaillère, notamment d'exécution élastique, et d'une butée ayant prise dans la crémaillère.
